(19) Europäisches Patentamt

European Patent Office

Office européen des brevets

(11) EP 0 884 793 A1

## (12) DEMANDE DE BREVET EUROPEEN

(43) Date de publication:
16.12.1998 Bulletin 1998/51

(51) Int. Cl.⁶: $H01M\ 4/74$, $H01M\ 4/70$, $H01M\ 4/66$

(21) Numéro de dépôt: 98401150.2

(22) Date de dépôt: 14.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 15.05.1997 FR 9705984

(71) Demandeur:
ALCATEL ALSTHOM COMPAGNIE GENERALE
D'ELECTRICITE
75008 Paris (FR)

(72) Inventeur: Cypel, Lenny
33000 Bordeauw (FR)

(74) Mandataire: Feray, Valérie et al
Compagnie Financière Alcatel,
DPI,
30, avenue Kléber
75116 Paris (FR)

(54) Electrode négative métal-hydrure en feuillard perforé enduit

(57) Cette électrode négative pour accumulateur du type Ni-MH, comporte un feuillard métallique (2) d'acier perforé enduit de matière poreuse active, la taille des trous (4) étant de l'ordre de 1mm à 2 mm, l'électrode étant obtenue par séchage et calandrage du feuillard enduit; le feuillard est en acier dur ou quart de dur, et le taux de jour du feuillard perforé est inférieur ou égal à 25%. Le feuillard comprend au moins une rive non perforée (6) de largeur supérieure ou égale à 5 mm.

FIG.2

EP 0 884 793 A1

Printed by Xerox (UK) Business Services
2.16.6/3.4

## Description

La présente invention concerne une électrode négative métal-hydrure plane pour accumulateur de tue Ni-MH, de forme prismatique.

On sait fabriquer des électrodes négatives à support en mousse de nickel qui donnent toute satisfaction, mais dont le coût de fabrication est relativement élevé.

Il est connu, par exemple par le document FR-A-2 519 806, de réaliser une électrode négative moins onéreuse, de tue dit plastifié ou non-fritté, se composant d'un support en feuillard d'acier (généralement nickelé) servant de collecteur de courant, sur lequel on enduit une pâte contenant la matière active pulvérulente et un liant, auquel on ajoute éventuellement un matériau conducteur. Le feuillard est perforé dans sa région centrale, généralement en rangées et colonnes identiques ou décalées en quinconce ; les perforations facilitent l'accrochage de la pâte sur le feuillard et réduisent la masse totale.

Le document EP-A-0 419 221 fait connaître une électrode spiralée pour accumulateur cylindrique, cette électrode présentant des perforations en quinconce dont le diamètre est compris entre 1mm et 5mm, avec un taux de jour (rapport de la surface perforée à la surface totale) compris entre 45% et 70%. Le document EP-A-0 632 513 décrit quant à lui un feuillard perforé en acier nickelé dont les trous ont un diamètre de 1mm à 2,5mm, avec un taux de jour préféré de 35% à 61%.

Les pâtes actives décrites contiennent une matière pulvérulente constituée d'une poudre d'alliage intermétallique, de type $AB_n$, où A est un mischmétal et B du nickel partiellement substitué par Al, Mn, et Co.

Ces mêmes pâtes sont utilisées pour les électrodes planes du tue considéré dans l'invention. Dans une telle électrode plane, afin de collecter le courant vers les bornes de l'accumulateur, il est prévu une rive non perforée généralement d'au moins 5mm, et généralement d'environ 8mm. Le feuillard à partir duquel est fabriquée l'électrode, comprend donc au moins une rive non perforée, et même généralement deux rives non perforées encadrant le zone perforée, car des électrodes tête-bêche peuvent être formées à partir d'une même bande de feuillard.

Lors de la fabrication de l'électrode, le feuillard enduit de pâte active est séché pour évaporer l'eau contenue dans la pâte, puis calandré (c'est-à-dire soumis par passage entre rouleaux à une pression élevée, par exemple de l'ordre de 30 tonnes) afin de comprimer la matière active et réduire l'épaisseur de l'électrode et sa porosité. Cette compression engendre un allongement différentiel entre la zone perforée et la zone non perforée conduisant à des déformations qui rendent la fabrication de faisceaux de plaques impossible. Cet allongement différentiel est d'autant plus marqué que la pâte active utilisée est comme on l'a dit une poudre métallique et non pas une poudre d'oxydes (facilement calandrable) telle que celles qu'on utilise dans les électrodes de cadmium.

Le but de l'invention est de remédier à cet inconvénient et de proposer une structure d'électrode plastifiée permettant d'obtenir une porosité relativement faible (typiquement inférieure à 27%) sans entraîner de déformation notable.

Ce but est atteint selon l'invention du fait que l'acier utilisé pour le feuillard est un acier dur ou quart de dur, la taille des trous est de l'ordre de 1 à 2mm, le feuillard comprenant au moins une rive non perforée de largeur supérieure ou égale à 5mm destinée à former la tête de plaque, et le taux de jour est inférieur ou égal à environ 25%. Ce taux est avantageusement supérieur ou égal à 19%, car des taux trop bas conduisent à un mauvais accrochage de la matière active.

Des trous de diamètre inférieur à 1mm rendent l'accrochage de la pâte moins sûr ; avec des trous de diamètre supérieur à 2mm, on ne constate pas d'amélioration à la résistance au calandrage, et plutôt une dégradation de la solidité.

Par feuillard en acier dur ("full hard"), on entend un acier de dureté Vickers comprise entre 180 et 240Hv, de résistance à la traction comprise entre 600 et 850N/mm" et d'élongation totale inférieure ou égale à 3%. Par feuillard en acier quart de dur ("quarter hard"), on entend une dureté Vickers d'environ 100Hv et une résistance à la traction comprise entre 380 et 450N/mm". Il va de soi que les gammes d'acier comprises entre ces deux standards sont acceptables pour l'invention. Il convient en effet d'utiliser des aciers d'une certaine dureté ; des expériences faites sur des aciers recuits ont conduit à des mauvais résultats.

Le feuillard est en principe en acier nickelé, d'une épaisseur comprise entre 6 et 9/100$^{ème}$mm.

D'autres caractéristiques et avantages de l'invention ressortiront de la description suivante, pour laquelle on se référera aux dessins annexés sur lesquels :

La figure 1 est une coupe transversale partielle d'une électrode du tue plastifié utilisé dans l'invention.

La figure 2 est une vue de dessus d'une bande de support d'électrode du type plastifié, utilisée dans l'invention

La figure 3 est un graphique illustrant la relation entre la porosité P (en %) recherchée pour l'électrode et l'allongement A (en %) observé sur la partie perforée du support ;

La figure 4 est un schéma illustrant les paramètres dimensionnels d'une perforation en quinconce ;

La figure 5 montre un schéma de perforations en quinconce correspondant à la figure 4 ;

La figure 6 montre une variante dimensionnelle du motif élémentaire des perforations ;

La figure 7 montre une autre variante dimensionnelle du motif élémentaire des perforations.

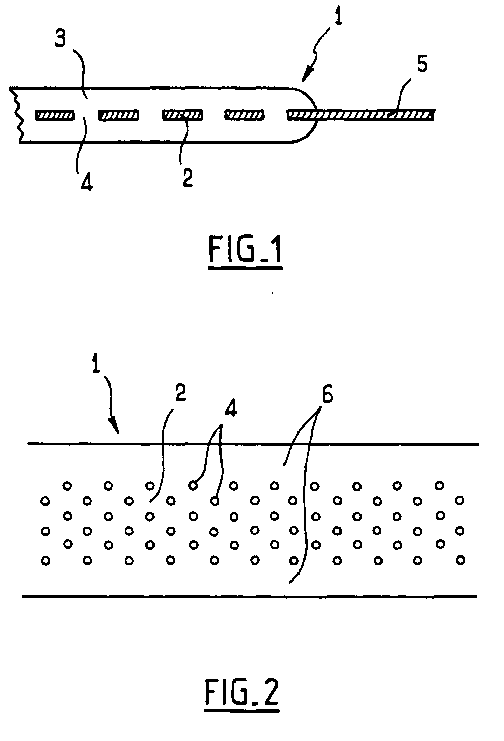

La figure 1 montre l'électrode enduite 1 constituée d'un feuillard métallique 2 (par exemple en acier de 6 à 9/100$^{ème}$mm nickelé sur ses deux faces sur une épaisseur de 3μm) servant de support à une enduction de matière active poreuse 3 s'accrochant grâce à des perforations 4 disposées en quinconce.

Les perforations ne s'étendent pas sur au moins une partie latérale de la plaque, qui constituera la tête de plaque 5. En pratique, il est prévu sur une bande de feuillard deux rives non perforées 6 (figure 2), les plaques d'électrodes individuelles étant fabriquées à partir de la bande par découpage transversal d'une électrode ou de deux électrodes tête-bêche.

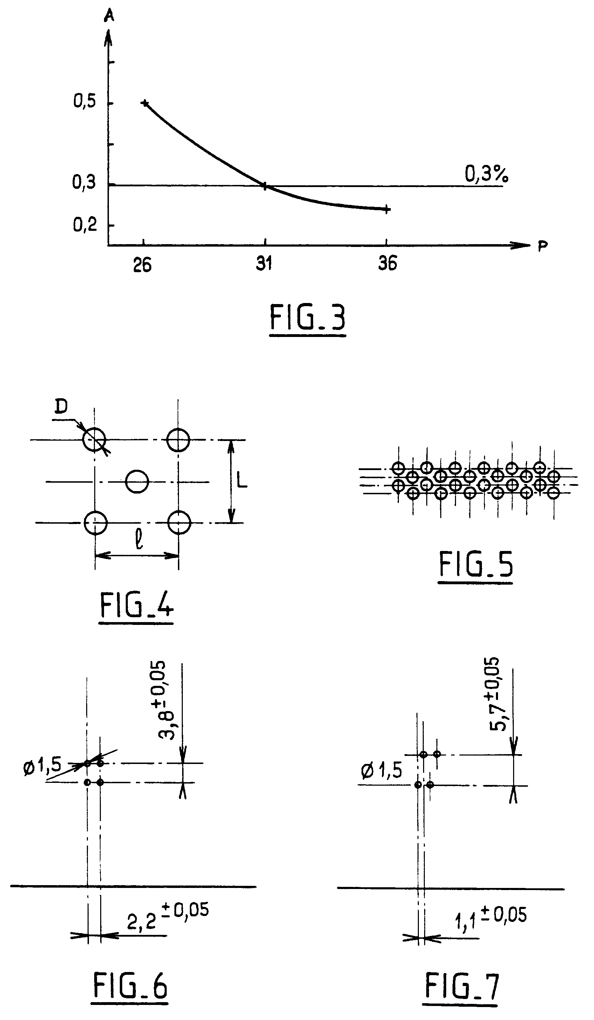

Comme expliqué plus haut, l'étape de calandrage du feuillard enduit séché s'accompagne d'un allongement de la partie perforée ; celui-ci est fonction de la porosité recherchée, comme l'illustre, pour un exemple particulier de réalisation de l'art antérieur, la figure 3, donnant en ordonnées le pourcentage d'allongement en fonction du pourcentage de porosité recherché. En dessous d'un pourcentage d'allongement de 0,3%, on ne constate plus de déformation notable de la bande au calandrage. On voit que ceci correspond à une porosité de 31%, alors qu'il est souhaitable d'obtenir des porosités plus faibles, c'est-à-dire au moins identiques à celles obtenues selon la technologie métal-hydrure sur support en mousse de métal (porosité d'environ 27% ± 2%).

Le figure 4 montre le détail d'un motif élémentaire de perforation en quinconce illustré plus largement sur la figure 5.

En appelant D le diamètre des trous, L l'entraxe de deux rangées se correspondant exactement (c'est-à-dire avec un écart de deux rangées), et l l'entraxe de deux colonnes se correspondant exactement, il est facile de calculer que le taux T de jour est $T = pi\, D^2/2lL$.

Un certain nombre d'expériences ont été menées avec différents taux de jour. Dans chaque cas, on a mesuré l'allongement au calandrage et l'effritement par chutes. Ces mesures comparatives non normalisées sont définies de la manière suivante.

Le pourcentage d'allongement est égal à [(D'-D) / D] x 100 , où D est une distance entre deux repères arbitraires tracés sur la bande avant calandrage, et D' est la distance entre ces mêmes repères après le calandrage. Pour ne pas donner de gauchissement, on considère que le pourcentage d'allongement ne doit pas être supérieur à 0,3%.

L'effritement est la valeur, moyennée sur plusieurs chutes d'éprouvettes identiques, de la quantité [(M-M') / M] x 100 , où M est la masse d'une éprouvette enduite et calandrée, et M' la masse de la même éprouvette après dix chutes standardisées de 500mm. Pour que l'accrochage de la pâte présente une solidité satisfaisante, on considère que le taux d'effritement doit être inférieur à 1%.

On rapportera ci-après cinq essais représentatifs des expériences menées.

Le premier essai est réalisé dans un feuillard en acier dur de 9/100$^{ème}$mm d'épaisseur, nickelé sur ses deux faces sur 3μm d'épaisseur, perforé dans des dimensions standard D=1,5mm ; l=2,2mm ; L=3,8mm, ce qui correspond à un taux T de 42,2%. Dans un tel essai, on obtient pour une porosité recherchée d'électrode de 27%, un taux d'effritement satisfaisant de 0,25% mais un allongement au calandrage supérieur à 0,5% ; l'électrode fabriquée n'est pas plane et n'est donc pas utilisable dans un faisceau de plaques.

En retirant dans un deuxième essai un poinçon sur deux dans l'outil de perforation permettant de réaliser le feuillard des figures 4 et 5, on obtient la répartition présentée figure 6, c'est-à-dire un motif de rangées et de colonnes perpendiculaires non décalées. Un calcul élémentaire donne un taux de jour de 21%. L'allongement mesuré lors de l'opération de calandrage n'est plus que de l'ordre de 0,3% ; l'électrode obtenue est alors quasiment plane. Le taux d'effritement, de 0,50%, est satisfaisant.

En retirant dans un troisième essai deux poinçons sur trois dans l'outil de perforation, on obtient la répartition représentée figure 7, correspondant finalement à une répartition en quinconce où L=11,4mm et l=2,2mm, d'où un taux de jour de 14%. L'allongement mesuré lors du calandrage est là encore inférieur à 0,3% ; l'électrode reste parfaitement plane. Mais le taux d'effritement est de 1,1%, ce qui correspond à une solidité mécanique insuffisante.

Afin d'affiner ces mesures, on modifie la taille du poinçon, dans le cas où l'on enlève un poinçon sur deux, avec un poinçon de diamètre 1,42mm au lieu de 1,5mm ; le taux de jour est de 19% ; l'allongement, qui reste inférieur à 0,3%, et le taux d'effritement, qui est de 0,70%, sont satisfaisants.

Un cinquième essai est réalisé en modifiant à nouveau la taille du poinçon, toujours dans la même configuration, le diamètre du poinçon passant de 1,5mm à 1,6mm. Le taux de jour est de 25%, l'allongement de 0,3% et l'effritement de 0,30%.

## Revendications

1. Electrode négative plane (1) pour accumulateur prismatique du type Ni-MH, comportant un feuillard métallique d'acier (2) perforé enduit de matière poreuse active (3), le feuillard comprenant au moins une rive non perforée de largeur supérieure ou égale à 5mm destinée à former la tête de plaque, l'électrode (1) étant obtenue par séchage et calandrage du feuillard enduit,
caractérisée en ce que le feuillard (2) est en acier dur ou quart de dur, la taille des trous (4) est de l'ordre de 1mm à 2mm, et le taux de jour du feuillard perforé est inférieur ou égal à 25%.

2. Electrode selon la revendication 1, caractérisée en ce que le taux de jour est supérieur ou égal à 19%.

3. Electrode selon l'une quelconque des revendications 1 ou 2, caractérisée en ce que le feuillard est en acier nickelé.

4. Electrode selon l'une quelconque des revendications 1 à 3, caractérisée en ce que l'épaisseur du feuillard (2) est comprise entre 6 et 9/100èmemm.

FIG.1

FIG.2

FIG.3

FIG.4

FIG.5

FIG.6

FIG.7

6

## EP 0 884 793 A1

Office européen
des brevets

**RAPPORT DE RECHERCHE EUROPEENNE**

Numéro de la demande

EP 98 40 1150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 011, no. 231 (E-527), 28 juillet 1987 & JP 62 047963 A (SHIN KOBE ELECTRIC MACH CO LTD), 2 mars 1987, * abrégé * | 1 | H01M4/74 H01M4/70 H01M4/66 |
| A | PATENT ABSTRACTS OF JAPAN vol. 011, no. 231 (E-527), 28 juillet 1987 & JP 62 047962 A (SHIN KOBE ELECTRIC MACH CO LTD), 2 mars 1987, * abrégé * | 1 | |
| A | US 5 578 398 A (JENKINS CARLTON G ET AL) 26 novembre 1996 * revendications 12,14-18 * | 1 | |
| A | US 5 466 544 A (FURUKAWA JUN) 14 novembre 1995 * colonne 4, ligne 8 - ligne 12 * | 1 | |
| A | PATENT ABSTRACTS OF JAPAN vol. 095, no. 001, 28 février 1995 -& JP 06 302319 A (MATSUSHITA ELECTRIC IND CO LTD), 28 octobre 1994, * abrégé * | 1 | **DOMAINES TECHNIQUES RECHERCHES (Int.Cl.6)** H01M |
| A | PATENT ABSTRACTS OF JAPAN vol. 018, no. 518 (E-1612), 29 septembre 1994 -& JP 06 181063 A (YUASA CORP), 28 juin 1994, * abrégé * | 1 | |
| A | DE 195 38 834 A (SAMSUNG DISPLAY DEVICES CO LTD) 12 décembre 1996 * colonne 3, ligne 1 - ligne 3 * | 3 | |

-/--

Le présent rapport a été établi pour toutes les revendications

| Lieu de la recherche | Date d'achèvement de la recherche | Examinateur |
|---|---|---|
| LA HAYE | 23 juillet 1998 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

7

## RAPPORT DE RECHERCHE EUROPEENNE

**Office européen des brevets**

Numéro de la demande

EP 98 40 1150

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 096, no. 009, 30 septembre 1996 & JP 08 138662 A (TOSHIBA BATTERY CO LTD), 31 mai 1996, * abrégé * | 1 | |
| D,A | EP 0 419 221 A (TOSHIBA BATTERY ;TOKYO SHIBAURA ELECTRIC CO (JP)) 27 mars 1991 | | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 23 juillet 1998 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)